# EUROPÄISCHE PATENTANMELDUNG

(11) **EP 4 693 219 A1**
(43) Veröffentlichungstag der Anmeldung: **11.02.2026**
(21) Anmeldenummer: 24193701.0
(22) Anmeldetag: 08.08.2024
(51) Int. Cl.: G06V 10/764, G06V 10/774, G06V 10/82, B25J 9/16, G06T 7/00, H01R 43/28

(54) **VERFAHREN ZUM STEUERN EINER BEARBEITUNG EINES KABELTEILSTÜCKS, STEUEREINHEIT, KABELBEARBEITUNGSVORRICHTUNG, VERFAHREN ZUM TRAINIEREN EINES KLASSIFIKATORS UND TRAININGSVORRICHTUNG**

(71) Anmelder: MD Elektronik GmbH, 84478 Waldkraiburg (DE)
(72) Erfinder: Grandl, Stefan, 84570 Oberflossing (DE); Wolfmeier, Peter A., 84518 Garching a.d. Alz (DE); Oßner, Martina, 84144 Geisenhausen (DE); Ohni, Josef, 84559 Kraiburg a. Inn (DE)
(74) Vertreter: Winter, Brandl - Partnerschaft mbB

(57) **Zusammenfassung**

Offenbart ist ein Verfahren zum Steuern einer Bearbeitung eines Kabelteilstücks (4) durch eine Kabelbearbeitungsvorrichtung (1), die zumindest eine Kabelbearbeitungseinheit (2) aufweist, eine Steuereinheit (12), die programmiert und ausgebildet ist, das Verfahren zum Steuern der Bearbeitung des Kabelteilstück auszuführen, und eine Kabelbearbeitungsvorrichtung, die die Steuereinheit aufweist. Ferner offenbart ist ein Verfahren zum Trainieren eines Klassifikators, der zum Überwachen einer Bearbeitung eines Kabelteilstücks (4) durch eine Kabelbearbeitungsvorrichtung (1), die zumindest eine Kabelbearbeitungseinheit (2) aufweist, einsetzbar ist, und eine Trainingsvorrichtung, die programmiert und ausgebildet ist, das Verfahren zum Trainieren des Klassifikators auszuführen.

## Beschreibung

Die vorliegende Offenbarung betrifft ein Verfahren zum Steuern einer Bearbeitung eines Kabelteilstücks, eine Steuervorrichtung und eine Kabelbearbeitungsvorrichtung. Die vorliegende Offenbarung betrifft außerdem ein Verfahren zum Trainieren eines Klassifikators, der zum Überwachen einer Bearbeitung eines Kabelteilstücks einsetzbar ist, und eine Trainingsvorrichtung.

In der automatischen Produktion eines Kabels erfolgt eine Überwachung entweder nach einem Bearbeitungsschritt oder nach Abschluss sämtlicher Bearbeitungsschritte in einer sog. End-of-line-Prüfung. Dabei wird geprüft, ob ein Kabel ordnungsgemäß, d.h. frei von einer Anomalie (einem Fehler) bearbeitet wurde. Der Begriff "Kabel" wird im Rahmen der folgenden Anmeldung breit z.B. als mehrere Kabel, die verbunden oder verzweigt sein können, ein Kabelbaum oder ein Kabelbündel verstanden.

Beispielsweise können folgende Anomalien auftreten: Fehlen eines oder mehrerer Kabelbestandteile, Defekt eines oder mehrerer Kabelbestandteile, Vorhandensein einer Verschmutzung oder eines Fremdkörpers, abweichende Anordnung von Kabelbestandteilen zueinander, abweichende Eigenschaft (z.B. Größe, Farbe, Form) eines Kabelbestanteils. Nur wenn keine Anomalie vorliegt, wurde das Kabel korrekt bearbeitet und ist für seine vorgesehene Nutzung verwendbar.

Bei der oben beschriebenen Überwachung wird derzeit unter Verwendung einer intelligenten Überwachungsvorrichtung konkret nach bestimmten Anomalien gesucht. Hierfür ist es erforderlich, dass alle möglichen Anomalien bekannt sind, um sie in einen in der Überwachungsvorrichtung verwendeten Algorithmus eintrainieren zu können. Für das Training des Algorithmus werden somit umfangreiche Trainingsdaten, die alle möglichen Anomalien abdecken, benötigt. Die Erstellung der Trainingsdaten erfordert somit einen hohen Zeit- und Kostenaufwand. Zudem besteht das Risiko einer hohen Falsch-Positiv-Rate, da jegliche Abweichungen einzutrainieren sind. Außerdem ist eine hohe Anfälligkeit bei einer abweichenden Bedingung während der Überwachung gegeben.

Aufgabe der vorliegenden Offenbarung ist es daher, die genannten Nachteile zu beseitigen oder zumindest zu mindern. Diese Aufgabe wird durch die Gegenstände mit den Merkmalen gemäß den unabhängigen Ansprüchen gelöst. Vorteilhafte Ausführungsformen sind Gegenstand der abhängigen Ansprüche und/oder sind in der Beschreibung und/oder den Figuren beschrieben.

Nachfolgend werden Schritte eines offenbarungsgemäßen Verfahrens zum Steuern einer Bearbeitung eines Kabelteilstücks durch eine Kabelbearbeitungsvorrichtung, die zumindest eine Kabelbearbeitungseinheit aufweist, beschrieben. Dabei kann das Kabelteilstück insbesondere ein Kabelende sein. Die Bearbeitung des Kabelteilstücks kann insbesondere getaktet durchgeführt werden. Das bedeutet, dass für die Bearbeitung des Kabels durch die mindestens eine Kabelbearbeitungseinheit nur eine vorgegebene Taktdauer, beispielsweise eine Taktdauer zwischen 2 und 10 Sekunden, bevorzugt 4 Sekunden, zur Verfügung steht. Nach Ablauf der Taktdauer erfolgt die Bearbeitung eines Kabelteilstücks eines nächsten Kabels. Die Kabelbearbeitungsvorrichtung kann zum Bearbeiten des Kabelteilstücks eine oder mehrere Kabelbearbeitungseinheiten aufweisen. Die mehreren Kabelbearbeitungseinheiten können durch das Kabelteilstück sequentiell durchlaufen werden. Darüber hinaus ist es auch möglich, dass die Kabelbearbeitungseinheit mehrere Kabel parallel bearbeitet.

Zunächst erfolgt ein Bearbeiten des Kabelteilstücks mit der mindestens einen Kabelbearbeitungseinheit, um das Kabelteilstück von einer Anfangskonfiguration zu einer Endkonfiguration zu überführen. Die Endkonfiguration unterscheidet sich im Vergleich zu der Anfangskonfiguration durch mindestens ein Endkonfigurations-Objekt (kann auch als Endkonfigurations-Merkmal oder Endkonfigurations-Klasse bezeichnet werden). Das Endkonfigurations-Objekt kann beispielsweise ein abisolierter Leiter, ein freigelegter Kabelschirm, ein Stecker, eine Crimphülse oder ein Etikett sein. Wie bereits erwähnt, kann auch eine sequentielle Bearbeitung des Kabelteilstücks durch mehrere Kabelbearbeitungseinheiten erfolgen.

Weiterhin erfolgt ein Erfassen eines Bilds des bearbeiteten Kabelteilstücks. Das Erfassen des Bilds des bearbeiteten Kabelteilstücks kann nach einem Durchlaufen jeder der Kabelbearbeitungseinheiten erfolgen. Das Erfassen des Bilds des bearbeiteten Kabelteilstücks kann aber auch nach einem Durchlauf ausgewählter oder aller Kabelbearbeitungseinheiten erfolgen.

Anschließend erfolgt ein Eingeben des Bilds in einen Klassifikator. Der Klassifikator ist trainiert und ausgebildet, um das mindestens eine Endkonfigurations-Objekt in dem Bild zu detektieren. Demnach ist der Klassifikator nur darauf trainiert, ordnungsgemäße Endkonfigurations-Objekte zu detektieren. Eine Detektion kann durch den Klassifikator insbesondere dann bestimmt werden, wenn das Endkonfigurations-Objekt mit einer vorgegebenen Wahrscheinlichkeit oder höher klassifiziert wird. Der Klassifikator ist nicht darauf trainiert, eine bestimmte Anomalie des bearbeiteten Kabelteilstücks zu detektieren. Demnach werden für das Training des Klassifikators keine Trainingsdaten, insbesondere Trainingsbilder, benötigt, die alle denkbaren Anomalien umfassen. Demzufolge kann ein Zeit- und Kostenaufwand für das Training des Klassifikators verringert werden. Bilder von einer korrekten Endkonfiguration, die das mindestens eine Endkonfigurations-Objekt aufweist, stehen hingegeben aufgrund einer geringen Ausschussrate in der Kabelproduktion in ausreichender Höhe als Trainingsdaten zur Verfügung. Somit wird eine robuste Detektion des Endkonfigurations-Objekts durch den Klassifikator mit einer geringen Falsch-Positiv-Rate erreicht.

Danach erfolgt ein Ändern eines Signals, das initial auf einen nOK-Zustand festgelegt ist, der angibt, dass das Kabelteilstück nicht ordnungsgemäß von der Anfangskonfiguration zu der Endkonfiguration überführt wurde, zu einem OK-Zustand, der angibt, dass das Kabelteilstück ordnungsgemäß von der Anfangskonfiguration zu der Endkonfiguration überführt wurde, wenn das mindestens eine Endkonfigurations-Objekt in dem Bild detektiert wurde. Das bedeutet, das Signal ist zunächst für jedes bearbeitete Kabelteilstück auf den nOK (nicht OK)-Zustand festgelegt. Eine Änderung auf den OK-Zustand erfolgt erst, wenn das mindestens eine Endkonfigurations-Objekt in dem Bild detektiert wurde. Auf diese Weise kann eine Robustheit des Verfahrens weiter verbessert werden, da eine Detektion des mindestens einen Endkonfigurations-Objekts erst erfolgt, wenn es in dem erfassten Bild mit einer vorgegebenen Wahrscheinlichkeit oder höher detektiert wurde.

Abschließend erfolgt ein Steuern der Kabelbearbeitungsvorrichtung unter Berücksichtigung des Signals. Darunter wird auch ein Steuern der mindestens einen oder der mehreren Kabelbearbeitungseinheiten der Kabelbearbeitungsvorrichtung verstanden. Das Steuern kann dabei breit als ein automatisches oder manuelles Steuern verstanden werden. Beispielsweise kann ein bearbeitetes Kabelteilstück, für das ein nOK-Signal ausgegeben wurde, automatisch durch die Kabelbearbeitungseinheit ausgesondert werden. Es kann aber auch eine manuelle Aussonderung durch einen Arbeiter erfolgen. Weiterhin kann ein automatisches oder manuelles Justieren oder ein Einstellen der Kabelbearbeitungsvorrichtung oder der mindestens einen Kabelbearbeitungseinheit als ein Steuern verstanden werden.

Das offenbarungsgemäße Verfahren kann angewendet werden, da in den allermeisten Bearbeitungsschritten das Wissen über das Vorliegen einer Anomalie für die Durchführung eines nachfolgenden Bearbeitungsschritts ausreichend ist. Der genaue Typ der Anomalie hingegen ist für die Durchführung des nachfolgenden Bearbeitungsschritts nicht von Bedeutung.

Unter einem Steuern kann, wie oben erwähnt, auch ein manuelles Steuern verstanden werden. Um dieses manuelle Steuern anzustoßen, kann das Signal, das den nOK-Zustand oder den OK-Zustand angibt, für eine akustische und/oder optische Ausgabe herangezogen werden. Z.B. kann das erfasste Bild auf einer Bildausgabeeinheit angezeigt werden. Wenn das mindestens eine Endkonfigurations-Objekt detektiert wurde und das Signal den OK-Zustand angibt, kann das detektierte Endkonfigurations-Objekt in dem Bild z.B. farbig (z.B. grün) umrandet hervorgehoben werden. Falls das mindestens eine Endkonfigurations-Objekt nicht detektiert wurde und das Signal den nOK-Zustand angibt, kann zwar keine Anomalie in dem dargestellten Bild angezeigt werden, es kann aber eine allgemeine Anzeige, dass das Kabelteilstück nicht ordnungsgemäß bearbeitet wurde, z.B. durch eine entsprechende (z.B. rote) Färbung des gesamten Bilds oder eine farbige (z.B. rote) Umrandung des gesamten Bilds, erfolgen.

Das Verfahren kann bevorzugt einen Schritt zum Beibehalten des Signals in dem nOK-Zustand, wenn eine vorgegebene Zeitdauer seit dem Erfassen des Bilds oder dem Eingeben des Bilds in den Klassifikator abgelaufen ist oder das mindestens eine Endkonfigurations-Objekt in dem Bild nicht detektiert wurde, aufweisen. Folglich wird nach Ablauf der vorgegebenen Zeitdauer für das betrachtete Kabelteilstück bestimmt, dass es nicht ordnungsgemäß in die Endkonfiguration überführt wurde. Dieses Vorgehen ist vor allem bei einer getakteten Bearbeitung sinnvoll. Die vorgegebene Dauer kann für einzelne Bearbeitungsschritte unterschiedlich festgelegt sein. Bei einem zeitkritischen Bearbeitungsschritt kann die vorgegebene Dauer insbesondere kleiner als die Taktdauer festgelegt sein, so dass die Taktung sicher eingehalten wird. Dabei kann auch ein höherer Ausstoß in Kauf genommen werden. Im Fall eines weniger zeitkritischen Bearbeitungsschritts kann die vorgegebene Dauer auch größer als die Taktdauer gewählt werden. Dadurch kann ggf. eine erneute Prüfung des bearbeiteten Kabelteilstücks erfolgen. Hierzu kann das bearbeitete Kabelteilstück auch neu eingelegt, gedreht, bewegt oder gereinigt werden. Weiterhin kann das Signal auf dem nOK-Zustand gehalten werden, wenn das Endkonfigurations-Objekt nicht detektiert wurde, d.h. der Klassifikator nicht mit einer vorgegebenen Wahrscheinlichkeit oder höher bestimmen kann, dass das Endkonfigurations-Objekt im erfassten Bild vorhanden ist.

Der Klassifikator kann trainiert und ausgebildet sein, um eine Größe und/oder eine Farbe und/oder eine Form des mindestens einen Endkonfigurations-Objekts zu detektieren. Das Ändern des Signals zu dem OK-Zustand kann dann nur durchgeführt werden, wenn das Endkonfigurations-Objekt eine vorgegebene Größe und/oder eine vorgegebene Farbe und/oder eine vorgegebene Form aufweist. Folglich erfolgt eine Detektion des Endkonfigurations-Objekts nur, wenn es eine vorgegebene Eigenschaft, d.h. Größe und/oder Farbe und/oder Form, aufweist. Weist das Endkonfigurations-Objekt die vorgegebene Eigenschaft, d.h. Größe und/oder Farbe und/oder Form, nicht auf, wird es durch den Klassifikator nicht detektiert. Es ist anzumerken, dass das Erfassen des Bilds mit einer vorgegebenen Erfassungsanordnung erfolgen kann, so dass eine zuverlässige Ermittlung der Größe möglich ist.

Zudem kann die Endkonfiguration mehrere Endkonfigurations-Objekte aufweisen. Der Klassifikator kann trainiert und ausgebildet sein, um die mehreren Endkonfigurations-Objekte jeweils einzeln im Bild zu detektieren. Das Ändern des Signals zu dem OK-Zustand kann dann nur durchgeführt werden, wenn alle der mehreren Endkonfigurations-Objekte im dem Bild detektiert wurden. Wenn folglich nicht alle der mehreren Endkonfigurations-Objekte detektiert wurden, wird das Signal auf dem nOK-Zustand behalten. Demzufolge kann sichergestellt werden, dass alle Endkonfigurations-Objekte durch die Kabelbearbeitungseinheit zu dem Kabelteilstück hinzugefügt wurden. Somit können auch komplexe Bearbeitungsschritte, bei denen mehrere Fertigungsschritte gleichzeitig durchgeführt werden, zuverlässig überwacht und die Bearbeitung des Kabelteilstücks entsprechend gesteuert werden.

Ferner kann der Klassifikator trainiert und ausgebildet sein, eine Relativposition zwischen den mehreren Endkonfigurations-Objekten zu erfassen. Das Ändern des Signals in den OK-Zustand kann dann nur durchgeführt werden, wenn die mehreren Endkonfigurations-Objekte eine vorgegebene Relativposition aufweisen. Demzufolge kann der Klassifikator trainiert und ausgebildet sein, um mehrere Endkonfigurations-Objekte in dem Bild zu detektieren. Nachdem die mehreren Endkonfigurations-Objekte alle in dem Bild detektiert wurden, kann eine spezielle Logik des Klassifikators die Relativposition zwischen den Endkonfigurations-Objekten im Bild erfassen. Die Relativposition kann dabei einen Abstand und/oder einen Winkel umfassen. Es ist wiederum anzumerken, dass das Erfassen des Bilds mit einer vorgegebenen Erfassungsanordnung erfolgen kann, so dass eine zuverlässige Ermittlung der Relativposition möglich ist.

Weiterhin kann der Klassifikator trainiert und ausgebildet sein, um eine Region of Interest (ROI) vorzuschlagen und die ROI hinsichtlich eines Vorhandenseins des mindestens einen Endkonfigurations-Objekts zu klassifizieren. Durch dieses Vorgehen ist eine zuverlässige Detektion des einen oder der mehren Endkonfigurations-Objekte in dem Bild möglich. Aufgrund einer Bestimmung der ROI kann zudem eine Anzeige des mindestens einen Endkonfigurations-Objekts auf der Bildausgabeeinheit erfolgen.

Der Klassifikator kann dazu ein Convolutional Neural Network (CNN) aufweisen. Dabei kann das CNN ein Region-Based Convolutional Neural Network (R-CNN) sein. Unter den Begriff R-CNN fallen auch die entsprechenden Weiterentwicklungen, wie etwa Fast R-CNN, Faster R-CNN und Mask R-CNN. Der Ansatz eines R-CNN ist zweistufig. Zunächst wird zumindest eine Region of Interest (ROI) im Bild vorgeschlagen und dann klassifiziert. Hierzu werden Merkmale im Bild, sog. Feature Maps extrahiert, dann werden Regionen, in denen bekannte Objekte sein können, sog. Region Proposals, vorgeschlagen und diese werden dann klassifiziert. Entsprechende Architekturen für ein R-CNN können beispielsweise aus den folgenden Bibliotheken erhalten werden: Release TensorFlow 2.12.0 (und neuer) unter tensorflow/tensorflow auf github.com; PyTorch 2.1.0 (und neuer) mit dazu passender Version von Torchvision auf https://pytorch.org/.

Weiterhin kann das CNN ein auf dem You Only Look Once (YOLO)-Algorithmus basierendes CNN (nachfolgend als YOLO-Netzwerk bezeichnet) sein. Im Unterschied zu einem R-CNN verwendet das YOLO-Netzwerk einen einstufigen Ansatz. Das YOLO-Netzwerk unterteilt das Bild in ein reguläres Raster und prädiziert mehrere ROI zusammen mit Objektwahrscheinlichkeiten für jede Zelle des Rasters. Für jede Zelle werden mehrere ROI mit unterschiedlicher Größe, die jeweils einen eigenen Konfidenzwert aufweisen, im Bild prädiziert. Somit werden ROI-Koordinaten und Konfidenzwert pro eintrainiertem Objekt erhalten. Ist in dem Bild ein eintrainiertes Objekt vorhanden, wird der Konfidenzwert für die ROI mit der entsprechenden Größe hoch sein. Somit kann das Objekt direkt detektiert werden. Am Ende werden ROI mit einem niedrigen Konfidenzwert herausgefiltert, so dass nur noch zuverlässig detektierbare Objekte übrigbleiben. Ein YOLO-Netzwerk ist typischerweise recheneffizienter, während ein R-CNN eine höhere Detektionsgenauigkeit erreichen kann.

Weiterhin kann der Klassifikator auf einem bekannten Algorithmus aus der klassischen Bilderkennung, z.B. Farb- und/oder Formerkennung, oder dem maschinellen Lernen, wie etwa einer Support Vector Machine (SVM), basieren.

Eine offenbarungsgemäße Steuereinheit ist mit einer Bildaufnahmeeinheit verbunden oder verbindbar und ist programmiert und ausgebildet, das offenbarungsgemäße Verfahren auszuführen.

Eine offenbarungsgemäße Kabelbearbeitungsvorrichtung weist mindestens eine Kabelbearbeitungseinheit, die ausgebildet ist, um ein Kabelteilstück zu bearbeiten, um das Kabelteilstück von einer Anfangskonfiguration zu einer Endkonfiguration zu überführen, auf. Die Endkonfiguration unterscheidet sich im Vergleich zu der Anfangskonfiguration durch mindestens ein Endkonfigurations-Objekt. Die Kabelbearbeitungsvorrichtung weist zudem eine Bildaufnahmeeinheit, die ausgebildet ist, um ein Bild des bearbeiteten Kabelteilstücks zu erfassen, und die offenbarungsgemäße Steuereinheit auf.

Nachfolgend werden Schritte eines Verfahrens zum Trainieren eines Klassifikators, der zum Steuern einer Bearbeitung eines Kabelteilstücks durch eine Kabelbearbeitungsvorrichtung, die zumindest eine Kabelbearbeitungseinheit umfasst, einsetzbar ist, beschrieben. Dabei kann das Kabelteilstück insbesondere ein Kabelende sein. Die Bearbeitung des Kabelteilstücks kann insbesondere getaktet durchgeführt werden. Das bedeutet, dass für die Bearbeitung des Kabels durch die mindestens eine Kabelbearbeitungseinheit nur eine vorgegebene Taktdauer, beispielsweise eine Taktdauer zwischen 2 und 10 Sekunden, bevorzugt 4 Sekunden, zur Verfügung steht. Nach Ablauf der Dauer erfolgt die Bearbeitung eines Kabelteilstücks eines nächsten Kabels. Die Kabelbearbeitungsvorrichtung kann zum Bearbeiten des Kabelteilstücks eine oder mehrere Kabelbearbeitungseinheiten aufweisen. Die mehreren Kabelbearbeitungseinheiten können durch das Kabelteilstück sequentiell durchlaufen werden. Darüber hinaus ist es auch möglich, dass die Kabelbearbeitungseinheit mehrere Kabel parallel bearbeitet. Bei der Bearbeitung wird das Kabelteilstück mit der Kabelbearbeitungseinheit von einer Anfangskonfiguration zu einer Endkonfiguration überführt. Die Endkonfiguration unterscheidet sich im Vergleich zu der Anfangskonfiguration durch mindestens ein Endkonfigurations-Objekt (kann auch als Endkonfigurations-Merkmal oder Endkonfigurations-Klasse bezeichnet werden). Der Klassifikator ist trainiert und ausgebildet, um ein Bild von dem bearbeiteten Kabelteilstück zu empfangen und das mindestens eine Endkonfigurations-Objekt in dem Bild zu detektieren.

Zunächst erfolgt ein Laden von mehreren Bildern, die ein bearbeitetes Kabelteilstück mit der Endkonfiguration, die das mindestens eine Endkonfigurations-Objekt aufweist, zeigen und in denen das mindestens eine Endkonfigurations-Objekt gekennzeichnet (kann auch als gelabelt bezeichnet werden) ist. Folglich werden für das nachfolgende Training nur Bilder verwendet, die ein ordnungsgemäß bearbeitetes Kabelteilstück zeigen. Diese Bilder stehen aufgrund der geringen Ausstoßrate bei der Kabelproduktion in ausreichender Menge zu Verfügung. Die Kennzeichnung (das Labeln) der Endkonfigurations-Objekte in den mehreren Bildern erfolgt durch eine Fachperson. Die Kennzeichnung (das Labeln) kann dabei ein Umranden des mindestens einen Endkonfigurations-Objekts und das Annotieren mit einer Kennzeichnung (einem Label) "OK" umfassen.

Danach erfolgt ein Aufteilen der mehreren Bilder in einen Anteil x Trainingsdaten, einen Anteil y Validierungsdaten und einen Anteil z Testdaten. Die Summe aus x, y und z ist gleich 1. Beispielsweise können die Bilder in 80 % Trainings-, 10 % Validierungs- und 10 % Testdaten aufgeteilt werden.

Es erfolgt dann ein Laden eines untrainierten oder vortrainierten Klassifikators. Als Ausgangsbasis kann ein verfügbarer vortrainierter Klassifikator verwendet werden. Ein vortrainierter Klassifikator wurde zwar meist auf Alltagsgegenstände trainiert, da aber beispielsweise die ersten Schichten eines CNN einfache Merkmale, wie etwa Kanten, Konturen oder Umrisse, die in jeder Anwendung nötig sind, detektieren, ist eine Verwendung eines derartigen Klassifikators möglich. Vorteilhafterweise müssen dann nur noch die letzten (tiefen) Schichten des CNN neu trainiert werden. Sofern ausreichend Trainingsdaten, Trainingszeit und Rechenleistung zur Verfügung stehen, kann der gewählte Klassifikator aber auch vollständig trainiert werden.

Anschließend erfolgt ein Trainieren des Klassifikators unter Verwendung der Trainingsdaten. Hierfür können bekannte Algorithmen für das überwachte Training verwendet werden.

Danach wird ein Eingeben der Validierungsdaten in den Klassifikator und ein Bestimmen eines Validierungs-Gütewerts einer durch den Klassifikator für die Validierungsdaten durchgeführten Klassifikation durchgeführt. Folglich wird direkt nach einer Durchführung eines Trainingslaufs die erreichte Leistung/Genauigkeit des Klassifikators gemessen. Dazu kann beispielsweise ein Validierungs-Loss definiert werden, also eine Funktion, die den aktuellen Fehler des Kl-Modells bezogen auf die Validierungsdaten bestimmt.

Wenn der Validierungs-Gütewert eine vorgegebene Bedingung nicht erfüllt, erfolgt ein erneutes Durführen des Trainieren-Schritts, des Eingeben-Schritts und des Bestimmen-Schritts. Folglich wird ein weiterer Trainingslauf ausgeführt, um dadurch die Leistung/Genauigkeit des Klassifikators zu erhöhen.

Wenn der Validierungs-Gütewert die vorgegebene Bedingung erfüllt, erfolgt ein Bereitstellen des trainierten Klassifikators. Der Klassifikator kann dann im Rahmen einer Steuerung einer Bearbeitung des Kabelteilstücks durch die Kabelbearbeitungsvorrichtung verwendet werden.

Weiterhin kann, wenn der Validierungs-Gütewert die vorgegebene Bedingung erfüllt, ein Eingeben der Testdaten in den Klassifikator und ein Bestimmen eines Vorhersage-Gütewerts des trainierten Klassifikators erfolgen. Demnach kann die Leistungsfähigkeit des Klassifikators anhand der Trainingsdaten bestimmt werden. Es kann ein geeigneter Schwellenwert, z.B. 95% bis 98 %, für die Detektionsgenauigkeit des Klassifikators definiert werden. Wenn dieser Schwellenwert nicht erreicht wird, können Maßnahmen zur Steigerung der Detektionsgenauigkeit ergriffen werden. Beispiele hierfür sind die Erhöhung der Anzahl der Trainingsdaten oder eine Hyperparameteroptimierung. Es ist anzumerken, dass bei der abschließenden Bestimmung des Vorhersage-Gütewerts auch Fehlerbilder zu den Testdaten hinzugefügt werden können, um einen realen Einsatz bei der Kabelbearbeitung, bei der Fehler auftreten können, zu simulieren.

Wenn der Validierungs-Gütewert oder der Vorhersage-Gütewert eine jeweils vorgegebene Bedingung, insbesondere nach erneuter Durchführung mehrere Trainieren-Schritte, nicht erfüllt, kann vor dem erneuten Durchführen des Trainieren-Schritts ein Ändern von Hyperparametern des Klassifikators durchgeführt werden. Hyperparameter umfassen z.B. die Anzahl der zu trainierenden Parameter (die z.B. über die Anzahl der Schichten im CNN gesteuert werden können), die Anzahl der verwendeten Trainingsläufe oder unterschiedliche Optimierungsalgorithmen während des Trainings (z.B. Adam oder RMSprop). Es existieren verschiedene Strategien, um die Kombination der verschiedenen Hyperparameter zu optimieren. Beispiele hierfür sind GridSearch (alle Parameterkombinationen werden durchprobiert), RandomSearch (nur zufällig ausgewählte Kombinationen werden ausprobiert) oder sonstige dem Fachmann bekannte Strategien.

Während des Trainierens des Klassifikators kann ein Bestimmen eines Trainings-Gütewerts erfolgen. Nach dem Bestimmen des Validierungs-Gütewerts kann dann ein Vergleichen des Trainings-Gütewerts mit dem Validierungs-Gütewert durchgeführt werden. Demzufolge kann eine Über- oder Unteranpassung ermittelt werden. Da der Klassifikator vorgesehen ist, um mindestens ein Endkonfigurations-Objekt, das für eine ordnungsgemäße Endkonfiguration vorhanden sein soll, zu detektieren, ist vor allem darauf zu achten, dass keine Unteranpassung vorliegt.

Weiterhin kann der Klassifikator trainiert und ausgebildet sein, um eine Region of Interest (ROI) vorzuschlagen und die ROI hinsichtlich eines Vorhandenseins des mindestens einen Endkonfigurations-Objekts zu klassifizieren. Durch dieses Vorgehen ist eine zuverlässige Detektion des einen oder der mehren Endkonfigurations-Objekte in dem Bild möglich. Aufgrund einer Bestimmung der ROI kann zudem eine Anzeige des mindestens einen Endkonfigurations-Objekts auf der Bildausgabeeinheit erfolgen.

Der Klassifikator kann ein Convolutional Neural Network (CNN) aufweisen. Dabei kann das CNN ein Region-Based Convolutional Neural Network (R-CNN) sein. Unter den Begriff R-CNN fallen auch die entsprechenden Weiterentwicklungen, wie Fast R-CNN, Faster R-CNN und Mask R-CNN. Der Ansatz eines R-CNN ist zweistufig. Zunächst wird zumindest eine Region of Interest (ROI) im Bild vorgeschlagen und dann klassifiziert. Hierzu werden Merkmale im Bild, sog. Feature Maps extrahiert, dann werden Regionen, in denen bekannte Objekte sein können, sog. Region Proposals, vorgeschlagen, und diese werden dann klassifiziert, sog. Classification. Entspreche Architekturen für ein R-CNN können beispielsweise aus den folgenden Bibliotheken erhalten werden: Release TensorFlow 2.12.0 (und neuer) unter tensorflow/tensorflow auf github.com; PyTorch 2.1.0 (und neuer) und dazu passendes Torchvision und https://pytorch.org/.

Weiterhin kann das CNN ein auf dem You Only Look Once (YOLO)-Algorithmus basierendes CNN (nachfolgend als YOLO-Netzwerk bezeichnet) sein. Im Unterschied zu einem R-CNN verwendet das YOLO-Netzwerk einen einstufigen Ansatz. Das YOLO-Netzwerk unterteilt das Bild in ein reguläres Raster und prädiziert mehre Regions of Interest (ROI) zusammen mit Objektwahrscheinlichkeiten für jede Zelle des Rasters. Für jede Zelle werden mehrere ROI mit unterschiedlicher Größe, die jeweils einen eigenen Konfidenzwert aufweisen, im Bild prädiziert. Somit werden ROI-Koordinaten und Konfidenzwert pro eintrainiertem Objekt erhalten. Ist in dem Bild ein eintrainiertes Objekt vorhanden, wird der Konfidenzwert für die ROI mit der entsprechenden Größe hoch sein. Somit kann das Objekt direkt detektiert werden. Am Ende werden ROI mit einem niedrigen Konfidenzwert herausgefiltert, so dass nur noch zuverlässig detektierbare Objekte übrigbleiben. Ein YOLO-Netzwerk ist typischerweise recheneffizienter, während ein R-CNN eine höhere Detektionsgenauigkeit erreicht.

Die mehreren Bilder können nicht augmentiert sein. Das bedeutet, dass die mehreren Bilder keiner vorherigen Bildbearbeitung, die ggf. durchgeführt wird, um die Anzahl der Trainingsdaten künstlich zu erhöhen, unterworfen wurden. Auf diese Weise wird der Klassifikator auf eine genaue Detektion des mindestens einen Endkonfigurations-Objekts getrimmt. Folglich weist der Klassifikator bei der Detektion nur eine geringe Varianz auf.

Außerdem können die mehreren Bilder keine Fehlerbilder aufweisen. Demzufolge werden für das Training nur Bilder verwendet, die eine ordnungsgemäße Endkonfiguration, die das mindestens eine Endkonfigurations-Objekt aufweist, zeigen. Demzufolge wird ein Kosten- und Zeitaufwand für die Beschaffung der mehreren Bilder deutlich verringert.

Zudem kann eine Neutrainieren des Klassifikators erfolgen, wenn neue Trainingsdaten zur Verfügung stehen und/oder ein verändertes Verhalten im operationellen Einsatz festgestellt wird (Data Drift oder Concept Drift).

Eine offenbarte Trainingsvorrichtung weist einen Speicher auf oder ist mit einem Speicher verbindbar, in dem mehrere Bilder, die ein bearbeitetes Kabelteilstück mit der Endkonfiguration, die das mindestens eine Endkonfigurations-Objekt aufweist, zeigen und in denen das mindestens eine Endkonfigurations-Objekt gekennzeichnet ist, und ein untrainierter oder vortrainierter Klassifikator gespeichert sind. Die Trainingsvorrichtung ist programmiert und ausgebildet, das offenbarungsgemäße Verfahren zum Trainieren des Klassifikators auszuführen.

### Kurzbeschreibung der Figuren

Nachfolgend werden Ausführungsformen der Offenbarung unter Bezugnahme auf die Figuren erläutert. Es zeigen:
Fig. 1 eine schematische Darstellung einer Kabelbearbeitungsvorrichtung gemäß einer Ausführungsform;
Fig. 2 eine schematische Darstellung einer Kabelbearbeitungsvorrichtung gemäß einer anderen Ausführungsform;
Fig. 3 eine schematische Darstellung einer Kabelbearbeitungsvorrichtung gemäß einer weiteren Ausführungsform;
Fig. 4 ein bearbeitetes Kabel, das einen abisolierten Innenleiter aufweist;
Fig. 5 ein bearbeitetes Kabel, das keinen abisolierten Innenleiter aufweist;
Fig. 6 ein Kabel mit einem optischen Steckergehäuse, auf das eine Schutzkappe gesteckt ist;
Fig. 7 ein Kabel mit einem optischen Steckergehäuse, auf das keine Schutzkappe gesteckt ist;
Fig. 8 ein Kabel, an dessen Kabelende ein Etikett angebracht ist;
Fig. 9 ein Kabel, an dessen Kabelende kein Etikett angebracht ist;
Fig. 10 ein Kabel, bei dem mehrere Kabelbestandteile als ein Endkonfigurations-Objekt erkannt werden;
Fig. 11 ein Kabel, bei dem die mehreren Kabelbestandteile eine abweichende Anordnung haben, so dass sie nicht als Endkonfigurations-Objekt erkannt werden;
Fig. 12 ein Kabel, an dessen Innenleiter zwei Litzen angebracht wurden, die eine vorgegeben Anordnung zueinander aufweisen sollen;
Fig. 13 ein Kabel, bei dem der Kabelschirm entsprechend einer vorgegebenen Länge abisoliert wurde;
Fig. 14 ein Kabel, bei dem der Kabelschirm nicht entsprechend einer vorgegebenen Länge abisoliert wurde;
Fig. 15 zwei über ein Verbindungsrohr verbundene Kabel, wobei ein Kabel auf eine vorgegebene Länge abgelängt wurde;
Fig. 16 zwei über ein Verbindungsrohr verbundene Kabel, wobei ein Kabel nicht auf eine vorgegebene Länge abgelängt wurde;
Fig. 17 ein Kabel, an das ein Stecker mit einer korrekten Farbe angebracht wurde;
Fig. 18 ein Kabel, an das ein Stecker mit einer falschen Farbe angebracht wurde;
Fig. 19 ein Kabel, bei dem der Mantel fehlerfrei ist;
Fig. 20 ein Kabel, bei dem der Mantel eine Beschädigung aufweist; und
Fig. 21 ein Kabel mit mehreren Endkonfigurations-Objekten, die eine vorgegebene Relativposition zueinander aufweisen.

### Beschreibung von Ausführungsformen

Nachfolgend werden Ausführungsformen der vorliegenden Offenbarung unter Bezugnahme auf die Figuren beschrieben. Dabei wird gleichen oder sich funktional entsprechenden Elementen das gleiche Bezugszeichen zugewiesen. Die nachfolgende Beschreibung ist als nicht einschränkend anzusehen.

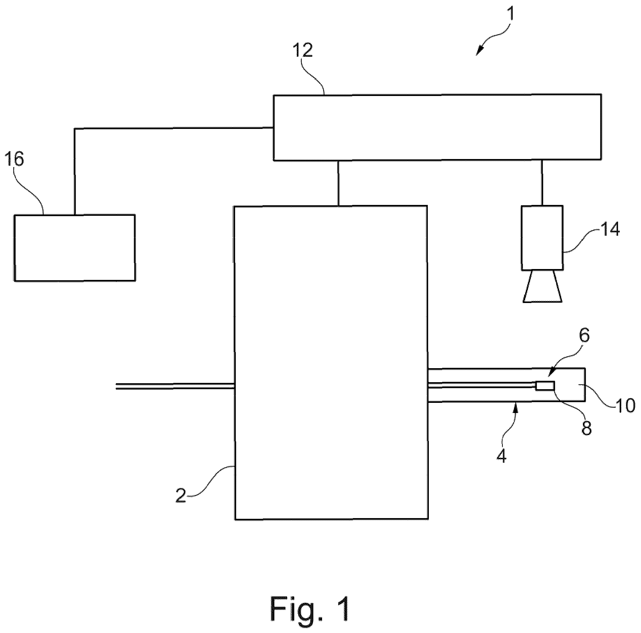

Fig. 1 zeigt eine schematische Ansicht einer Kabelbearbeitungsvorrichtung 1. Die Kabelbearbeitungsvorrichtung 1 umfasst mindestens eine Kabelbearbeitungseinheit 2, mittels welcher ein Kabelteilstück 4 eines Kabels von einer Anfangskonfiguration in eine Endkonfiguration 6 bearbeitet wird. Die Anfangskonfiguration bezeichnet dabei den Ausgangszustand des zu bearbeitenden Kabelteilstücks 4 vor der Bearbeitung. Die Endkonfiguration bezeichnet den Zustand des bearbeiteten Kabelteilstücks 4. Die Endkonfiguration 6 unterscheidet sich dabei von der Anfangskonfiguration durch mindestens ein Endkonfigurations-Objekt.

Es versteht sich, dass eine Mehrzahl an Kabelbearbeitungseinheiten 2 von der Kabelbearbeitungsvorrichtung 1 umfasst sein kann, die jeweils unterschiedliche Bearbeitungsschritte am Kabelteilstück, ggf. auch an unterschiedlichen Kabelteilstücken desselben Kabels, durchführen.

Die Endkonfiguration 6 kann abhängig vom Bearbeitungsstand des Kabelteilstücks 6 sein sowie abhängig von der Art des zu bearbeitenden Kabels. In Fig. 1 entspricht die Endkonfiguration 6 einer schematisch dargestellten Crimphülse 8. Die Endkonfiguration 6 kann in Durchflussrichtung nach dem Bearbeitungsschritt, ggf. auch nach Austritt aus der Kabelbearbeitungseinheit 2, auf einer Kabelaufnahmeeinrichtung 10 bildlich erfasst werden.

Eine Steuerung der Kabelbearbeitungseinheit 2 und somit auch der Kabelbearbeitungsvorrichtung 1 erfolgt durch eine Steuereinheit 12. Die Steuereinheit 12 ist mit einer Bildaufnahmeeinheit 14, welche ausgebildet ist, die Endkonfiguration 6 zu erfassen, verbunden. Der Aufnahmebereich der Bildaufnahmeeinheit 14 zur Erfassung der Endkonfiguration 6 ist vorzugsweise 25 cm mal 25 cm. Ist eine Endkonfiguration 6 innerhalb des Aufnahmebereichs angeordnet, kann die Bildaufnahmeeinheit 14 die darin angeordneten Endkonfigurationen 6 im Aufnahmebereich erfassen.

Die Bildaufnahmeeinheit 14 ist vorzugsweise als Digitalkamera ausgebildet und kann eine Auflösung von 1024 mal 1024 Pixel aufweisen. Bei dieser Konfiguration von Aufnahmebereich und Auflösung ist sichergestellt, dass das Bild ausreichend gut aufgelöst ist, um eine zuverlässige Bildauswertung durchzuführen. Eine geringere Auflösung bei gleichem Aufnahmebereich oder ein größerer Aufnahmebereich bei kleinerer Auflösung kann das Resultat der Bildauswertung nachteilig beeinflussen. Es sollte sichergestellt werden, dass eine Region of Interest (ROI), die auch als interessierender Bereich bezeichnet werden kann, mindestens 20 Pixel, vorzugsweise 50 oder mehr Pixel, umfasst. Es können jedoch ein größerer Aufnahmebereich und eine größere Auflösung gewählt werden, was jedoch Nachteile hinsichtlich der Geschwindigkeit einer nachfolgenden Bildverarbeitung haben kann.

Nachdem die Bildaufnahmeeinheit 14 ein Bild von der Endkonfiguration 6 erfasst und an die Steuereinheit 12 übertragen hat, erfolgt in der Steuereinheit 12 eine Bildauswertung. Die Steuereinheit 12 umfasst dazu einen Klassifikator, der beispielsweise ein trainiertes Convolutional Neural Network (CNN) aufweisen kann, das trainiert und ausgebildet ist, in einem ersten Schritt mindestens eine Region of Interest (ROI) der wenigstens einen Endkonfiguration 6 in dem mindestens einen erfassten Bild vorzuschlagen und in einem zweiten Schritt die ROI hinsichtlich eines Vorhandenseins des mindestens einen Endkonfiguration-Objekts, z.B. der Crimphülse 8, zu klassifizieren. Das CNN kann dabei ein Region-Based CNN (R-CNN) oder ein auf dem You Only Look Once (YOLO)-Algorithmus basierendes CNN sein. Unter R-CNN sind auch Weiterentwicklungen wie etwa Fast R-CNN, Faster R-CNN und Mask R-CNN zu verstehen. Demzufolge detektiert der Klassifikator nur Endkonfigurations-Objekte, die in der Endkonfiguration 6 umfasst sind.

Eine Anomalie wird indes bestimmt, wenn das mindestens eine Endkonfigurations-Objekt nicht detektiert wird. Ein genauer Typ der Anomalie kann jedoch nicht bestimmt werden.

Hierzu wird ein maschinenlesbarer Code in einen nichtflüchtigen Speicher der Steuereinheit 12 geladen, welcher den trainierten Klassifikator umfasst. Durch Eingeben des erfassten Bilds in den trainierten Klassifikator kann die Steuereinheit 12 mindestens eine ROI vorschlagen und diese mindestens eine ROI hinsichtlich des Vorhandenseins des Endkonfigurations-Objekts klassifizieren.

Vorzugsweise wird für jede mittels des Bilds erfasste Endkonfiguration 6 mindestens eine ROI ermittelt. Selbstverständlich kann die Endkonfiguration 6 mehre Endkonfigurations-Objekte aufweisen, so dass auch mehrere ROI für die Endkonfiguration 6 vorgeschlagen werden.

Auf Grundlage des Ergebnisses der Klassifikation für die mindestens eine ROI gibt die Steuereinheit 12 ein Signal aus. Das Signal ist initial auf einen nOK (nicht OK)-Zustand festgelegt, der angibt, dass das Kabelteilstück 4 nicht ordnungsgemäß von der Anfangskonfiguration zu der Endkonfiguration 6 überführt wurde. Die Steuereinheit 12 ändert das Signal zu einem OK-Zustand, der angibt, dass das Kabelteilstück 4 ordnungsgemäß von der Anfangskonfiguration zu der Endkonfiguration 6 überführt wurde, wenn das mindestens eine Endkonfigurations-Objekt in dem Bild detektiert wurde. Bei einer getakteten Bearbeitung hat es sich zudem als vorteilhaft erwiesen, wenn das Signal auf dem nOK-Zustand gehalten wird, wenn eine vorgegebene Zeitdauer seit dem Erfassen des Bilds oder dem Eingeben des Bilds in den Klassifikator abgelaufen ist. Auf diese Weise kann eine Einhaltung der Taktung sichergestellt werden.

Anschließend erfolgt ein Steuern der Kabelbearbeitungsvorrichtung 1, was auch ein Steuern der Kabelbearbeitungseinheit 2 umfasst, unter Berücksichtigung des Signals. Das Steuern kann dabei breit als ein automatisches oder manuelles Steuern verstanden werden. Beispielsweise kann das bearbeitete Kabelteilstück 4, für das ein nOK-Signal ausgegeben wurde, automatisch durch die Kabelbearbeitungseinheit 2 ausgesondert werden. Es kann aber auch eine manuelle Aussonderung durch einen Arbeiter erfolgen.

Weiterhin können ein Justieren oder ein Einstellen der Kabelbearbeitungsvorrichtung 1 oder der Kabelbearbeitungseinheit 2 durchgeführt werden.

Ferner kann die Steuereinheit 12 mit einer Bildausgabeeinheit 16 verbunden sein. Die Steuereinheit 12 kann dann ausgebildet sein, eine Darstellung der von der Steuereinheit 12 bereitgestellten Informationen auf der Bildausgabeeinheit 16 zu veranlassen. Vorzugweise erfolgt die Darstellung der ROI und der jeweiligen OK-Klassifikation auf dem Bild, das durch die Bildaufnahmeeinheit 14 aufgenommen wurde und das zu überprüfende Kabelteilstück 4 darstellt. Eine Darstellung einer Anomalie kann aufgrund der nicht durchgeführten Bestimmung einer entsprechenden ROI nicht durchgeführt werden.

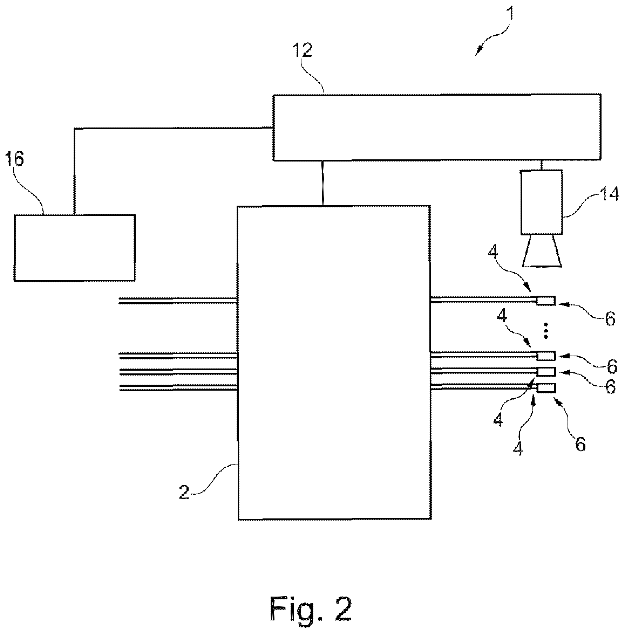

Fig. 2 zeigt eine Ausführungsform in Hinblick auf eine parallele Bearbeitung mehrerer Kabelteilstücke 4 durch die Kabelbearbeitungseinheit 2. Die Kabelbearbeitungseinheit 2, als auch die Kabelbearbeitungsvorrichtung 1, sind dazu ausgebildet, eine Vielzahl von Kabelteilstücken 4, hier n Kabelteilstücke 4, parallel zu bearbeiten. Vorzugsweise werden 30 bis 100 Kabel gleichzeitig von der Kabelbearbeitungseinheit 2 bearbeitet und jeweils von der Anfangskonfiguration in die Endkonfiguration 6 überführt.

Damit besteht die Herausforderung gleichzeitig für eine hohe Anzahl an Kabeln, z.B. 30 bis 100 Kabel, eine Echtzeitkontrolle dahingehend bereitzustellen, ob jedes einzelne Kabelteilstück 4 fehlerfrei bearbeitet wurde. Es hat sich gezeigt, dass das Vorschlagen einer ROI und das Klassifizieren der ROI hinsichtlich des Vorhandenseins des Endkonfigurations-Objekts auch auf die parallele Bearbeitung von Kabelteilstücken 4 erfolgreich anwendbar ist.

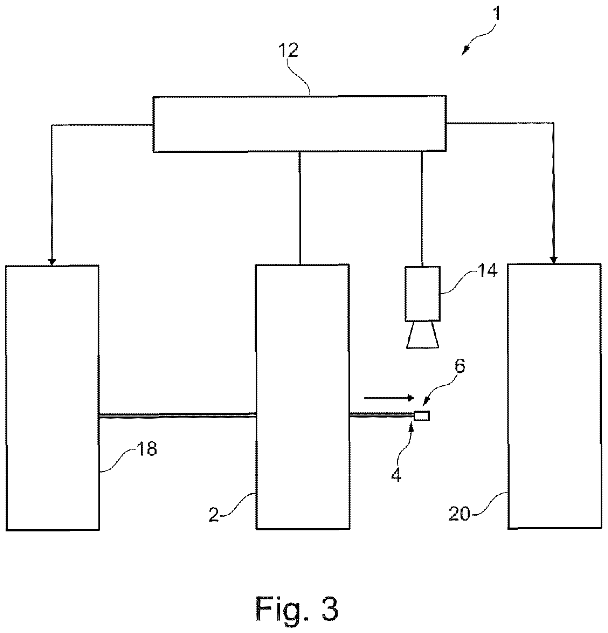

Fig. 3 zeigt eine Kabelbearbeitungsvorrichtung 1, die mehrere Kabelbearbeitungseinheiten 2, 18, 20 aufweist. Die Kabelbearbeitungseinheiten 2, 18, 20 werden durch das zu bearbeitende Kabelteilstück 4, wie durch einen Pfeil in Fig. 3 angedeutet, von links nach rechts sequentiell durchlaufen. Die Steuereinheit 12 ist dann ausgebildet, die mehreren Kabelbearbeitungseinheiten 2, 18, 20 zu steuern.

Es ist in Fig. 3 zu erkennen, dass eine Erfassung eines Bilds der Endkonfiguration 6 und eine entsprechende Auswertung des Bilds durch die Steuereinheit 12 nur nach der zweiten Kabelbearbeitungseinheit 2 erfolgt. Da nicht nach jeder der Kabelbearbeitungseinheiten 2, 18, 20 eine Untersuchung der Endkonfiguration 6 erfolgt, sind weniger Bildaufnahmeeinheiten 14 und eine geringere Rechenleistung in der Steuereinheit 12 erforderlich. Beispielsweise ist es vorteilhaft, nur fehleranfällige Bearbeitungsschritte oder Bearbeitungsschritte, die einen großen Einfluss auf nachfolgende Bearbeitungsschritte haben, zu überwachen. Darüber hinaus ist es auch denkbar, dass nur eine abschließende Überwachung nach Durchlauf aller Kabelbearbeitungseinheiten 2, 18,20 zum Zweck einer End-of-Line-Prüfung erfolgt.

Nachfolgend werden Beispiele unterschiedlicher Endkonfigurationen und die Detektion des mindestens einen Endkonfigurations-Objekts beschrieben.

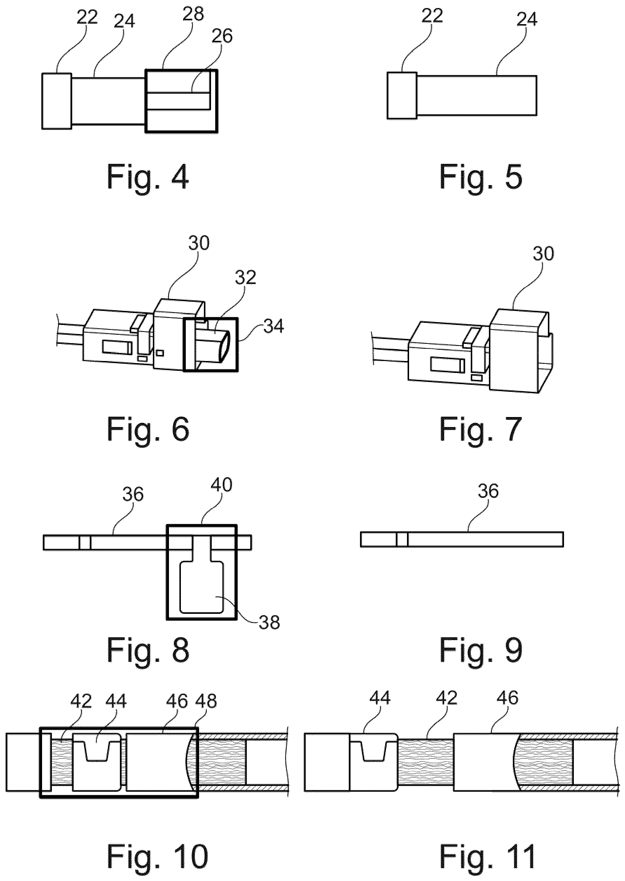

Fig. 4 zeigt ein Kabelende, das einen Mantel 22, einen freigelegten Kabelschirm 24 und einen abisolierten Innenleiter 26 aufweist. In dem betrachteten Bearbeitungsschritt soll der Innenleiter 26 abisoliert werden, so dass der abisolierte Innenleiter 26 dem Endkonfigurations-Objekt entspricht. Da der abisolierte Innenleiter 26 in dem in Fig. 4 gezeigten Beispiel vorhanden ist, ist der Klassifikator imstande, eine ROI 28 zu ermitteln und diese mit "OK" zu klassifizieren. Folglich ändert die Steuereinheit 12 das Signal von dem nOK-Zustand in den OK-Zustand. Fig. 5 hingegen zeigt ein Beispiel, in dem der Innenleiter nicht abisoliert wurde. Demnach kann der Klassifikator keine ROI bestimmen und klassifizieren. Demnach wird für das in Fig. 5 gezeigte Beispiel das von der Steuereinheit 12 ausgegebene Signal in dem nOK-Zustand gehalten.

Fig. 6 zeigt ein Kabelende, das ein optisches Steckergehäuse 30 und eine dafür vorgesehene Schmutzkappe 32 zum Schutz einer Linse des optischen Steckergehäuses 30 aufweist. In dem betrachteten Bearbeitungsschritt soll die Schmutzkappe 32 in das optische Steckergehäuse 30 gedrückt werden, so dass die Schmutzkappe 32 dem Endkonfigurations-Objekt entspricht. In dem in Fig. 6 gezeigten Beispiel wird durch den Klassifikator eine ROI 34 für die Schmutzkappe 32 bestimmt und mit "OK" klassifiziert. Die Steuereinheit 12 ändert folglich das ausgegebene Signal von dem nOK-Zustand in den OK-Zustand. In dem in Fig. 7 gezeigten Beispiel ist die Schmutzkappe 32 nicht vorhanden, so dass der Klassifikator keine ROI bestimmen und klassifizieren kann. Demnach hält die Steuereinheit 12 das Signal auf dem nOK-Zustand.

Fig. 8 zeigt ein Kabelteilstück 36, an das ein Etikett 38 angebracht ist. In dem betrachteten Bearbeitungsschritt soll die Anbringung des Etiketts 38 erfolgen. Demnach kann der Klassifikator für das in Fig. 8 gezeigte Beispiel eine ROI 40 bestimmen und diese mit "OK" klassifizieren. Eine Klassifizierung des Etiketts kann dabei auch entsprechend einer Form und/oder einer Größe und/oder eines Aussehens erfolgen, wenn diese entsprechend im Klassifikator eintrainiert wurden. In Fig. 9 hingegen fehlt das Etikett, so dass keine ROI bestimmt und klassifiziert werden kann.

Fig. 10 zeigt ein Kabelteilstück, das einen Kabelschirm 42, eine Crimphülse 44 und einen Mantel 46 aufweist. In dem betrachteten Bearbeitungsschritt soll die Crimphülse 44 rechts von dem freigelegten Kabelschirm 42 und benachbart zu dem Mantel 46 angebracht werden. Folglich entspricht nicht nur die Crimphülse 44, sondern die gesamte Anordnung von Kabelschirm 42, Crimphülse 44 und Mantel 46 dem Endkonfigurations-Objekt. Da die Crimphülse 44 in dem in Fig. 10 gezeigten Beispiel korrekt angebracht wurde, kann durch den Klassifikator eine ROI 48 bestimmt und mit "OK" klassifiziert werden. Das von der Steuereinheit 12 ausgegebene Signal wird dann auf den OK-Zustand geändert. In dem in Fig. 11 gezeigten Beispiel wurde die Crimphülse 44 beabstandet zu dem Mantel 46 angebracht, so dass der Kabelschirm 42 zwischen Crimphülse 44 und Mantel 46 vorhanden ist. Obwohl in dem in Fig. 11 gezeigten Beispiel keine ROI vorgeschlagen wurde, kann bei einem Fall, bei dem die Crimphülse 44 weiter rechts angebracht wurde, ggf. trotzdem eine ROI bestimmt werden. Diese ROI würde jedoch anschließend mit "nOK" klassifiziert werden. Demnach wird das von der Steuereinheit 12 ausgegebene Signal weiterhin auf dem nOK-Zustand gehalten.

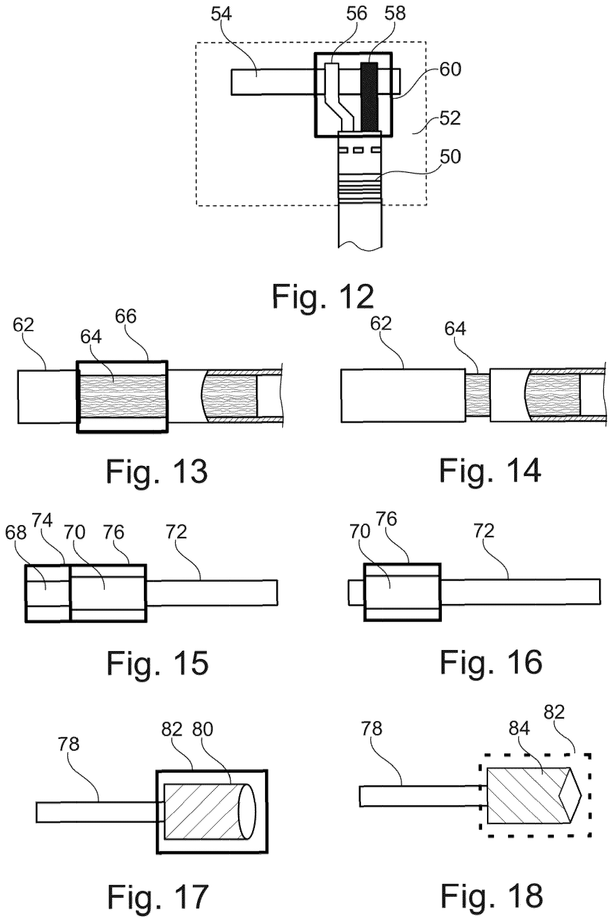

In dem in Fig. 12 gezeigten Beispiel ist ein Kabel 50 gezeigt, das auf einem Messbereich 52, der ein Prüfbrett 54 aufweist, angeordnet ist. Der Messbereich 52 kann beispielsweise auf der Kabelaufnahme 10 angeordnet sein. Das Kabel 50 weist zwei durch ein Entfernen des Kabelmantels freigelegte Litzen 56 bzw. 58 unterschiedlicher Farben (vorliegend schwarz und weiß) auf, die zur Prüfung entsprechend nebeneinander auf dem Prüfbrett 54 angeordnet sind. Im betrachteten Bearbeitungsschritt sollen die Litzen 56, 58 in einer vorgegebenen Anordnung für einen nachfolgenden, für die jeweilige Litze 56, 58 spezifischen Bearbeitungsschritt positioniert werden. Demnach entsprechen nicht nur die Litzen, sondern auch deren Anordnung zueinander dem Endkonfigurations-Objekt. Da die Litzen 56, 58 in dem in Fig. 10 gezeigten Beispiel ordnungsgemäß angeordnet wurden, kann der Klassifikator eine ROI 60 bestimmen und mit "OK" klassifizieren. Das von der Steuereinheit 12 ausgegebene Signal wird folglich in den OK-Zustand geändert.

In Fig. 13 ist ein Kabelteilstück gezeigt, bei dem ein Mantel 62 für eine vorgegebene Länge entfernt ist, um einen Kabelschirm 64 freizulegen. Das Freilegen des Kabelschirms 64 über die vorgegebene Länge soll dabei in dem betrachteten Bearbeitungsschritt erfolgen. Demnach entspricht das Endkonfigurations-Objekt nicht nur dem Kabelschirm, sondern auch der vorgegebenen Länge. Um die Länge des freigelegten Kabelschirms 64 bestimmen zu können, ist es erforderlich, dass die Bildaufnahmeeinheit 16 in einer vorgegebenen Positionsbeziehung beim Erfassen der Endkonfiguration 6 angeordnet ist. In Fig. 13 weist der Kabelschirm 64 folglich die vorgegebene Länge auf, so dass der Klassifikator imstande ist, eine ROI 66 zu bestimmen und mit "OK" zu klassifizieren. Das von der Steuereinheit 12 ausgegebene Signal wird folglich in den OK-Zustand geändert. In Fig. 14 wurde der Kabelschirm 64 freigelegt, aber nicht über die vorgegebene Länge. Folglich wird keine ROI vorgeschlagen und es findet somit auch keine Klassifikation der ROI statt. Das von der Steuereinheit 12 ausgegeben Signal wird folglich auf dem nOK-Zustand gehalten.

Fig. 15 zeigt ein Kabel 68, das über ein Verbindungsrohr 70 mit einem weiteren Kabel 72 verbunden ist. Dabei ist das Kabel 68 links von dem Verbindungsrohr 70 angeordnet und weist eine vorgegebene Länge auf. In dem betrachteten Bearbeitungsschritt soll das Ablängen des Kabels 68, das links von dem Verbindungsrohr 70 angeordnet ist, auf die vorgegebene Länge erfolgen. Demnach entsprechen das Kabel 68 mit der vorgegebenen Länge und das Verbindungsrohr 70 den Endkonfigurations-Objekten. Zudem ist eine vorgegebene Relativposition zwischen dem Kabel 68 und dem Verbindungsrohr 70 einzuhalten. In dem in Fig. 15 gezeigten Beispiel werden für das Verbindungsrohr 70 und das Kabel 68 ROI 74, 76 vorgeschlagen und aufgrund des Vorliegens der richtigen

Anordnung und der korrekten Länge des Kabels 68 mit "OK" klassifiziert. Demnach wird das von der Steuereinheit 12 ausgegebene Signal auf den OK-Zustand geändert. In dem in Fig. 16 gezeigten Beispiel hingegen wird zwar die ROI 76 für das Verbindungsrohr 70 vorgeschlagen und mit "OK" klassifiziert, aufgrund der zu geringen Länge wird aber keine ROI für das Kabel 68 vorgeschlagen und klassifiziert. Demnach wird das von der Steuereinheit 12 ausgegebene Signal auf dem nOK-Zustand gehalten.

Fig. 17 zeigt ein Kabel, an dessen Ende ein Stecker 80 mit einer ersten Farbe angebracht wurde. Dieser Stecker 80 soll in dem betrachteten Bearbeitungsschritt angebracht werden. Da in dem in Fig. 17 gezeigten Beispiel eine korrekte Anbringung erfolgt ist, kann auch eine ROI 82 vorgeschlagen und mit "OK" klassifiziert werden. Das von der Steuereinheit 12 ausgegebene Signal wird folglich auf den OK-Zustand geändert. In Fig. 18 wird fälschlicherweise ein Stecker 84 mit einer zweiten Farbe an das Ende des Kabels 78 angebracht. Es wird in diesem Fall zwar eine ROI 82 vorgeschlagen, diese wird aber, wie durch die gestrichelte Umrandung angegeben, mit "nOK" klassifiziert. Demnach wird das von der Steuereinheit 12 ausgegebene Signal auf dem nOK-Zustand gehalten.

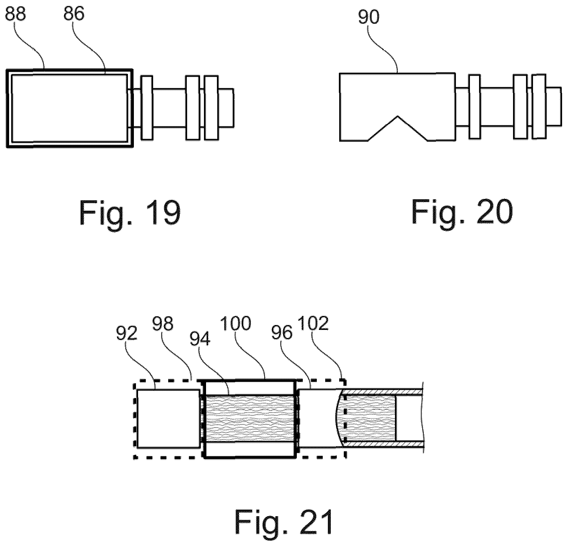

Fig. 19 zeigt ein Kabel, das einen Mantel 86 aufweist. In dem betrachteten Bearbeitungsschritt erfolgt u.a. ein Kürzen des Kabels, bei dem eine Beschädigung des Mantels 86 auftreten kann. Demnach entspricht der Mantel 86 vorliegend dem Endkonfigurations-Objekt. Wie in Fig. 19 zu erkennen ist, ist keine Beschädigung des Mantels 86 erfolgt, so dass dieser eine rechteckige Form aufweist. Der Klassifikator kann somit eine ROI 88 bestimmen und diese mit "OK" klassifizieren. Ein von der Steuereinheit 12 ausgegebenes Signal wird folglich auf den OK-Zustand geändert. In Fig. 20 hingegen ist im Mantel 90 eine Einkerbung vorhanden, so dass dieser keine rechteckige Form mehr aufweist. Der Klassifikator kann somit keine ROI vorschlagen und klassifizieren. Ein von der Steuereinheit 12 ausgegebenes Signal wird folglich auf dem nOK-Zustand gehalten.

Fig. 21 zeigt ein Kabelteilstück, das einen Mantel 92, einen abschnittsweise freigelegten Kabelschirm 94 und einen weiteren Abschnitt mit einem Mantel 96 aufweist. In dem betrachteten Bearbeitungsschritt soll der Kabelschirm 94 abschnittsweise freigelegt werden. Dabei sollen der Kabelschirm 94 und der Mantel 96 eine vorgegebene Länge aufweisen und der Mantel 96 mit der vorgegebenen Länge soll rechts von dem Kabelschirm 94 angeordnet sein. Demzufolge entsprechen die Mäntel 92, 96 und der Kabelschirm 94 den Endkonfigurations-Objekten. Zudem ist der Klassifikator trainiert und ausgebildet, eine Relativposition zwischen den Endkonfigurations-Objekten zu erfassen. Dabei ändert die Steuereinheit 12 das Signal nur in den OK-Zustand, wenn alle Endkonfigurations-Objekte detektiert wurden und diese eine vorgegebene Relativposition aufweisen. In dem in Fig. 14 gezeigten Beispiel sind die geforderten Endkonfigurations-Objekte vorhanden und weisen die geforderte Länge auf, so dass die ROI 98, 100 und 102 vorgeschlagen und mit "OK" klassifiziert werden. Darüber werden die Anforderungen bezüglich der Relativposition eingehalten, so dass ein von der Steuereinheit 12 ausgegebenes Signal auf den OK-Zustand geändert wird.

Um die oben beschriebene Detektion des mindestens einen Endkonfigurations-Objekts vornehmen zu können, muss der Klassifikator, der insbesondere ein R-CNN oder ein auf dem YOLO-Algorithmus basierendes CNN sein kann, entsprechend trainiert sein. Ein Verfahren zum Trainieren des Klassifikators wird daher beispielhaft für das in Fig. 4 und Fig. 5 gezeigte Beispiel des abisolierten Leiters 26 beschrieben.

Zuerst werden mehrere Bilder von Kabelteilstücken beschafft, die das Endkonfigurations-Objekt, d.h. den abisolierten Leiter 26, aufweisen. Diese mehreren Bilder werden dann durch eine Fachperson geprüft und als OK klassifiziert und das Endkonfigurations-Objekt, d.h. der abisolierte Leiter 26, gelabelt. "Labeln" bedeutet dabei, dass das Endkonfigurations-Objekt mit einer sog. Bounding Box zum Angeben der ROI umrahmt wird und die Bounding Box mit dem Label "OK" annotiert wird. Dabei können eine oder mehrere Boxen pro Bild eingefügt werden. Hierfür sind etwa hundert Bilder ausreichend. Es können aber auch mehr als hundert Bilder verwendet werden.

Die gelabelten Bilder werden dann in einen Anteil x Trainings-, einen Anteil y Validierungs- und einen Anteil z Testdaten aufgeteilt. Die Summe von x, y und z ist dabei gleich 1. Eine beispielhafte Aufteilungsrate ist 80% Trainings-, 10% Validierungs- und 10% Testdaten

Danach wird eine Netzwerkarchitektur für den Klassifikator gewählt. Hierfür kann ein Vertreter der R-CNN-Familie oder ein auf dem YOLO-Algorithmus basierendes CNN (nachfolgend als YOLO-Netzwerk bezeichnet) ausgewählt werden.

Dabei kann ein verfügbarer, vortrainierter Klassifikator verwendet werden. Ein derartiger Klassifikator wurde zwar meist auf Alltagsgegenstände trainiert. Da aber die ersten Schichten primitive Merkmale, die in jeder Anwendung nötig sind, (d.h. Kanten, Konturen oder Umrisse) detektieren, ist eine Verwendung möglich. In diesem Fall müssen die letzten (tiefen) Schichten des Netzwerks neu trainiert werden, da erst hier die spezifischen Merkmale der Endkonfiguration 6 des Kabelteilstücks 4 von Bedeutung sind. Dieses Vorgehen wird auch als "Transfer Learning" bezeichnet.

Sofern genügend Trainingsdaten, Trainingszeit und Rechenleistung zur Verfügung stehen, kann der gewählte Klassifikator aber auch unter Verwendung von vorhandenen Bildern von Kabelteilstücken vollständig neu trainiert werden.

Nach Auswahl der Netzwerkarchitektur erfolgt das Trainieren unter Verwendung der oben erwähnten Trainingsdaten. Direkt im Training kann ein bereits erreichter Trainings-Gütewert des Klassifikators kontinuierlich erfasst werden. Dazu kann ein Trainings-Loss als der Trainings-Gütewert definiert werden. Der Trainings-Loss ist eine Funktion, die den aktuellen Fehler des Klassifikators bezogen auf die Trainingsdaten bestimmt.

Bei Objektdetektionsalgorithmen können mit Vorteil zwei Metriken zur Bestimmung des Loss kombiniert werden. Es kann die Detektionsgüte als Maß für die Lokalisierung des zu detektierenden Objekts bestimmt werden. Beispielsweise kann hierfür der Intersection over Union (loU)-Algorithmus verwendet werden. Zudem kann die Klassifikationsgüte als Maß für die korrekte Klassifikation der ROI verwendet werden. Diese beiden Werte können dann final zum Loss kombiniert werden.

Zunächst erfolgt ein erster Trainingslauf (eine erste Trainingsepoche) mit den gesamten Trainingsdaten. Nach dem ersten Trainingslauf werden die Validierungsdaten verwendet, um einen Validierungs-Gütewert zu erfassen. Dazu kann ein Validierungs-Loss als der Validierungs-Gütewert definiert werden. Der Validierungs-Loss gibt dabei den Fehler des Klassifikators bezogen auf die Validierungsdaten an. Es ist vorteilhaft, den Trainings- und Validierungs-Loss identisch zu berechnen. Durch Vergleichen von Trainingsmit Validierungs-Loss ist eine Über- oder Unteranpassung des Klassifikators feststellbar.

Um zu bestimmen, ob das Trainieren des Klassifikators abgeschlossen ist, wird eine durch die Validierungs-Gütewert einzuhaltende Bedingung vorgegeben. Nach Durchlauf jedes Trainingslaufs erfolgt dann ein Vergleich des erfassten Validierungs-Gütewerts mit der vorgegebenen Bedingung. Beispielsweise kann bei Verwendung des Validierungs-Loss ein Schwellenwert vorgegeben werden, der von dem Validierungs-Loss zu unterschreiten ist.

Wenn folglich der Validierungs-Gütewert die vorgegebene Bedingung nach Durchlauf eines Trainingslaufs nicht erfüllt, wird ein erneuter Trainingslauf angestoßen, um eine Genauigkeit des Klassifikators zu verbessern. Wenn der Validierungs-Gütewert die vorgegebene Bedingung erfüllt, erfolgt ein Bereitstellen des trainierten Klassifikators.

Trotz Durchführung mehrerer Trainingsläufe kann der Fall auftreten, dass der Validierungs-Gütewert nicht die vorgegebene Bedingung erfüllt, also nicht direkt der geeignete Klassifikator verwendet wird, da viele Parameter des Klassifikators zunächst mit einem Erfahrungs- oder Standardwert belegt werden. In diesem Fall kann dann eine Hyperparameteroptimierung durchgeführt werden. Hyperparameter sind z.B. die Anzahl der zu trainierenden Parameter (die z.B. über die Anzahl der Schichten im CNN gesteuert werden können), die Anzahl der verwendeten Trainingsläufe und unterschiedliche Optimierungsalgorithmen während des Trainings (z.B. Adam, RMSprop, ...). Es existieren verschiedene Strategien zur Hyperparameteroptimierung, z.B. GridSearch (alle Parameterkombinationen werden durchprobiert), RandomSearch (nur zufällig ausgewählte Kombinationen werden ausprobiert) oder sonstige dem Fachmann bekannte Strategien.

Nachdem der Validierungs-Gütewert die vorgegebene Bedingung erfüllt, kann der trainierte Klassifikator unter Verwendung der Testdaten getestet werden, um einen Vorhersage-Gütewert zu bestimmen. Hierfür kann ein Schwellenwert bestimmt werden, der durch den Vorhersage-Gütewert, z.B. 98 %, einzuhalten ist. Erst wenn dieser Schwellenwert eingehalten wird, kann der trainierte Klassifikator für den Einsatz bei der Kabelbearbeitung freigegeben werden. Andernfalls kann ein erneutes Training des Klassifikators ggf. mit Hyperparameteroptimierung durchgeführt werden.

Es ist anzumerken, dass bei der abschließenden Bestimmung des Vorhersage-Gütewerts auch Fehlerbilder zu den oben beschriebenen Testdaten hinzugefügt werden können, um einen realen Einsatz bei der Kabelbearbeitung, bei der Fehler auftreten können, zu simulieren.

Weiterhin ist zu erwähnen, dass das offenbarte Verfahren zum Trainieren durch einen Computer mit hoher Rechenleistung auszuführen ist. Der Computer weist dazu u.a. einen Speicher auf oder ist mit einem Speicher verbindbar, in dem die mehreren Bilder, in denen das mindestens eine Endkonfigurations-Objekt gekennzeichnet (gelabelt) ist, und ein untrainierter oder vortrainierter Klassifikator gespeichert sind. Der Computer entspricht demnach einer Trainingsvorrichtung.

### Bezugszeichenliste

- 1: Kabelbearbeitungsvorrichtung
- 2: Kabelbearbeitungseinheit
- 4: Kabelteilstück
- 6: Endkonfiguration
- 8: Crimphülse
- 10: Kabelaufnahme
- 12: Steuereinheit
- 14: Bildaufnahmeeinheit
- 16: Bildausgabeeinheit
- 18: Kabelbearbeitungseinheit
- 20: Kabelbearbeitungseinheit
- 22: Mantel
- 24: Kabelschirm
- 26: Innenleiter
- 28: Region of Interest (ROI)
- 30: optisches Steckergehäuse
- 32: Schutzkappe
- 34: Region of Interest (ROI)
- 36: Kabel
- 38: Etikett
- 40: Region of Interest (ROI)
- 42: Kabelschirm
- 44: Crimphülse
- 46: Mantel
- 48: Region of Interest (ROI)
- 50: Kabel
- 52: Messbereich
- 54: Prüfbrett
- 56: weiße Litze
- 58: schwarze Litze
- 60: Region of Interest (ROI)
- 62: Mantel
- 64: Kabelschirm
- 66: Region of Interest (ROI)
- 68: Kabel
- 70: Verbindungsrohr
- 72: Kabel
- 74: Region of Interest (ROI)
- 76: Region of Interest (ROI)
- 78: Kabel
- 80: Stecker
- 82: Region of Interest (ROI)
- 84: Stecker
- 86: Mantel
- 88: Region of Interest (ROI)
- 90: defekter Mantel
- 92: Mantel
- 94: Kabelschirm
- 96: Mantel
- 98: Region of Interest (ROI)
- 100: Region of Interest (ROI)
- 102: Region of Interest (ROI)

## Patentansprüche

1. Verfahren zum Steuern einer, insbesondere getakteten, Bearbeitung eines Kabelteilstücks (4), insbesondere eines Kabelendes, durch eine Kabelbearbeitungsvorrichtung (1), die zumindest eine Kabelbearbeitungseinheit (2) aufweist, wobei das Verfahren die folgenden Schritte aufweist:
- Bearbeiten des Kabelteilstücks (4) mit der mindestens einen Kabelbearbeitungseinheit (2), um das Kabelteilstück (4) von einer Anfangskonfiguration zu einer Endkonfiguration (6) zu überführen, wobei sich die Endkonfiguration (6) im Vergleich zu der Anfangskonfiguration durch mindestens ein Endkonfigurations-Objekt unterscheidet,
- Erfassen eines Bilds des bearbeiteten Kabelteilstücks (4),
- Eingeben des Bilds in einen Klassifikator, der trainiert und ausgebildet ist, um das mindestens eine Endkonfigurations-Objekt in dem Bild zu detektieren,
- Ändern eines Signals, das initial auf einen nOK-Zustand festgelegt ist, der angibt, dass das Kabelteilstück (4) nicht ordnungsgemäß von der Anfangskonfiguration zu der Endkonfiguration (6) überführt wurde, zu einem OK-Zustand, der angibt, dass das Kabelteilstück (4) ordnungsgemäß von der Anfangskonfiguration zu der Endkonfiguration (6) überführt wurde, wenn das mindestens eine Endkonfigurations-Objekt in dem Bild detektiert wurde, und
- Steuern der Kabelbearbeitungsvorrichtung (1) unter Berücksichtigung des Signals.

2. Verfahren gemäß Anspruch 1, das ferner aufweist:
- Beibehalten des Signals in dem nOK-Zustand, wenn eine vorgegebene Zeitdauer seit dem Erfassen des Bilds oder dem Eingeben des Bilds in den Klassifikator abgelaufen ist oder das mindestens eine Endkonfigurations-Objekt in dem Bild nicht detektiert wurde.

3. Verfahren gemäß einem der Ansprüche 1 oder 2, wobei
- der Klassifikator trainiert und ausgebildet ist, um eine Größe und/oder eine Farbe und/oder eine Form des mindestens einen Endkonfigurations-Objekts zu detektieren, und
- das Ändern des Signals zu dem OK-Zustand nur durchgeführt wird, wenn das Endkonfigurations-Objekt eine vorgegebene Größe und/oder eine vorgegebene Farbe und/oder eine vorgegebene Form aufweist.

4. Verfahren gemäß einem der Ansprüche 1 bis 3, wobei
- die Endkonfiguration (6) mehrere Endkonfigurations-Objekte aufweist,
- der Klassifikator trainiert und ausgebildet ist, um die mehreren Endkonfigurations-Objekte jeweils einzeln im Bild zu detektieren, und
- das Ändern des Signals zu dem OK-Zustand nur durchgeführt wird, wenn alle der mehreren Endkonfigurations-Objekte im dem Bild detektiert wurden.

5. Verfahren gemäß Anspruch 4, wobei
- der Klassifikator trainiert und ausgebildet ist, eine Relativposition zwischen den mehreren Endkonfigurations-Objekten zu erfassen, und
- das Ändern des Signals in den OK-Zustand nur durchgeführt wird, wenn die mehreren Endkonfigurations-Objekte eine vorgegebene Relativposition aufweisen.

6. Verfahren gemäß einem der Ansprüche 1 bis 5, wobei
- der Klassifikator trainiert und ausgebildet ist, um mindestens eine Region of Interest (ROI) in dem Bild vorzuschlagen und die ROI hinsichtlich eines Vorhandenseins des mindestens einen Endkonfigurations-Objekts zu klassifizieren.

7. Steuereinheit (12), die mit einer Bildaufnahmeeinheit (14) verbunden oder verbindbar ist und programmiert und ausgebildet ist, das Verfahren gemäß einem der Ansprüche 1 bis 6 auszuführen.

8. Kabelbearbeitungsvorrichtung (1), die aufweist:
- mindestens eine Kabelbearbeitungseinheit (2), die ausgebildet ist, um ein Kabelteilstück (4) zu bearbeiten, um das Kabelteilstück (4) von einer Anfangskonfiguration zu einer Endkonfiguration (6) zu überführen, wobei sich die Endkonfiguration (6) im Vergleich zu der Anfangskonfiguration durch mindestens ein Endkonfigurations-Objekt unterscheidet,
- eine Bildaufnahmeeinheit (14), die ausgebildet ist, um ein Bild des bearbeiteten Kabelteilstücks (4) zu erfassen, und
- die Steuereinheit (12) gemäß Anspruch 7.

9. Verfahren zum Trainieren eines Klassifikators, der zum Steuern einer, bevorzugt getakteten, Bearbeitung eines Kabelteilstücks (4), insbesondere eines Kabelendes, durch eine Kabelbearbeitungsvorrichtung (1), die zumindest eine Kabelbearbeitungseinheit (2) aufweist, einsetzbar ist, wobei das Kabelteilstück (4) mit der Kabelbearbeitungseinheit (2) von einer Anfangskonfiguration zu einer Endkonfiguration (6) überführt wird, wobei sich die Endkonfiguration (6) im Vergleich zu der Anfangskonfiguration durch mindestens ein Endkonfigurations-Objekt unterscheidet, wobei der Klassifikator trainiert und ausgebildet ist, um ein Bild von dem bearbeiteten Kabelteilstück (4) zu empfangen und das mindestens eine Endkonfigurations-Objekt in dem Bild zu detektieren, wobei das Verfahren die folgenden Schritte aufweist:
- Laden von mehreren Bildern, die ein bearbeitetes Kabelteilstück (4) mit der Endkonfiguration (6), die das mindestens eine Endkonfigurations-Objekt aufweist, zeigen und in denen das mindestens eine Endkonfigurations-Objekt gekennzeichnet ist,
- Aufteilen der mehreren Bilder in einen Anteil x Trainingsdaten, einen Anteil y Validierungsdaten und einen Anteil z Testdaten, wobei die Summe aus x, y und z gleich 1 ist,
- Laden eines untrainierten oder vortrainierten Klassifikators,
- Trainieren des Klassifikators unter Verwendung der Trainingsdaten,
- Eingeben der Validierungsdaten in den Klassifikator und Bestimmen eines Validierungs-Gütewerts einer durch den Klassifikator für die Validierungsdaten durchgeführten Klassifikation,
- wenn der Validierungs-Gütewert eine vorgegebene Bedingung nicht erfüllt, erneutes Durführen des Trainieren-Schritts, des Eingeben-Schritts und des Bestimmen-Schritts,
- wenn der Validierungs-Gütewert die vorgegebene Bedingung erfüllt, Bereitstellen des trainierten Klassifikators.

10. Verfahren gemäß Anspruch 9, das ferner aufweist:
- wenn der Validierungs-Gütewert die vorgegebene Bedingung erfüllt, Eingeben der Testdaten in den Klassifikator und Bestimmen eines Vorhersage-Gütewerts des trainierten Klassifikators.

11. Verfahren gemäß einem der Ansprüche 9 oder 10, das ferner aufweist:
- wenn Validierungs-Gütewert oder der Vorhersage-Gütewert eine jeweils vorgegebene Bedingung nicht erfüllt, vor dem erneuten Durchführen des Trainieren-Schritts, Ändern von Hyperparametern des Klassifikators.

12. Verfahren gemäß einem der Ansprüche 9 bis 11, das ferner aufweist:
- während des Trainierens des Klassifikators, Bestimmen eines Trainings-Gütewerts, und
- nach dem Bestimmen des Validierungs-Gütewerts, Vergleichen des Trainings-Gütewerts mit dem Validierungs-Gütewert.

13. Verfahren gemäß einem der Ansprüche 9 bis 12, wobei
- der Klassifikator trainiert und ausgebildet ist, um mindestens eine Region of Interest (ROI) in dem Bild vorzuschlagen und die ROI hinsichtlich eines Vorhandenseins des mindestens einen Endkonfigurations-Objekts zu klassifizieren.

14. Verfahren gemäß einem der Ansprüche 9 bis 13 wobei
- die mehreren Bilder nicht augmentiert sind.

15. Verfahren gemäß einem der Ansprüche 9 bis 14, wobei
- die mehreren Bilder keine Fehlerbilder umfassen.

16. Trainingsvorrichtung, die einen Speicher aufweist oder mit einem Speicher verbindbar ist, in dem mehrere Bilder, die ein bearbeitetes Kabelteilstück (4) mit der Endkonfiguration (6), die das mindestens eine Endkonfigurations-Objekt aufweist, zeigen und in denen das Endkonfigurations-Objekt gekennzeichnet ist, und ein untrainierter oder vortrainierter Klassifikator gespeichert sind, wobei die Trainingsvorrichtung programmiert und ausgebildet ist, das Verfahren gemäß einem der Ansprüche 9 bis 15 auszuführen.
